# EUROPEAN PATENT APPLICATION

(11) **EP 4 730 001 A1**
(43) Date of publication of application: **22.04.2026**
(21) Application number: 23941290.1
(22) Date of filing: 30.10.2023
(51) Int. Cl.: G02B 6/124, G02B 6/34, G02B 27/01

(54) **LIGHT GUIDE DEVICE, OPTICAL MODULE, AND HEAD-MOUNTED DISPLAY APPARATUS**

(30) Priority: 13.06.2023 CN 202310700976
(71) Applicant: Goertek Optical Technology (Shanghai) Co., Ltd., Shanghai 201109 (CN)
(72) Inventor: CHENG, Xin, Shanghai 201109 (CN)
(74) Representative: Rau, Schneck & Hübner Patentanwälte Rechtsanwälte PartGmbB
(86) International application number: PCT/CN2023/127504
(87) International publication number: WO 2024/255066

(57) **Abstract**

Embodiments of the present disclosure provide a light guide device, an optical module and a head-mounted display apparatus; wherein the light guide device includes a light guide substrate and an in-coupling area and an out-coupling area provided on the light guide substrate; wherein the out-coupling area is configured for performing pupil expansion and out-coupling of light from the in-coupling area, the out-coupling area includes at least a first area, and the first area is composed of at least two adjacent one-dimensional gratings with a target interval L formed between any two adjacent one-dimensional gratings, and the target interval L is 0≤L≤4mm. The optical solution provided by the embodiments of the present disclosure can reduce the processing difficulty of the out-coupling area.

## Description

### CROSS-REFERENCE TO RELATED APPLICATIONS

The present application claims priority to Chinese patent application No. 202310700976.9 filed with the CNIPA on June 13, 2023 and entitled "LIGHT GUIDE DEVICE, OPTICAL MODULE AND HEAD-MOUNTED DISPLAY APPARATUS", which is hereby incorporated by reference in its entirety.

### TECHNICAL FIELD

Embodiments of the present disclosure relate to the technical field of optical imaging, and particularly to a light guide device, an optical module and a head-mounted display apparatus.

### BACKGROUND

In existing technologies, diffractive optical waveguide devices typically adopt a design in which a two-dimensional grating performs both pupil expansion and out-coupling. The light propagation path involves the light coupled into the waveguide being expanded laterally upon encountering the two-dimensional grating. However, due to the symmetry of light diffraction and the fixed pupil expansion direction of the two-dimensional grating, which makes it impossible to adjust the angles in the two directions, at least one corner of the two-dimensional grating consistently exhibits a filed-of-view dark spot. This seriously compromises the uniformity and integrity of the image displayed by the optical waveguide, and thereby affects the user experience. Furthermore, the design of the two-dimensional grating is relatively complex, which will increase the production cost.

### SUMMARY

An objective of the present disclosure is to provide new technical solutions for a light guide device, an optical module and a head-mounted display apparatus.

In a first aspect, the present disclosure provides a light guide device. The light guide device comprises a light guide substrate and an in-coupling area and an out-coupling area provided on the light guide substrate;
wherein the out-coupling area is configured for performing pupil expansion and out-coupling of light from the in-coupling area, the out-coupling area comprises at least a first area, and the first area is composed of at least two adjacent one-dimensional gratings with a target interval L formed between any two adjacent one-dimensional gratings, and the target interval L is 0≤L≤4mm.

Optionally, the first area is located in the middle of the out-coupling area, and within the first area, the grating vectors of any two adjacent one-dimensional gratings form a mirror-symmetrical structure and form a target included angle.

Optionally, the target included angle ranges from 50° to 70°.

Optionally, the first area comprises 2 to 8 one-dimensional gratings, and the number of the one-dimensional gratings is an even number.

Optionally, the out-coupling area further comprises a second area and a third area, which are provided on opposite sides of the first area and comprise a one-dimensional grating or a two-dimensional grating.

Optionally, the first area comprises a first grating, a second grating, a third grating, and a fourth grating, which are arranged adjacently and are all one-dimensional gratings;
the first grating and the second grating are located in the middle of the first area, and the grating vectors of the first grating and the second grating form a mirror-symmetrical structure and form a target included angle ranging from 50° to 70°; and
the third grating is located on a side of the first grating away from the second grating, the fourth grating is located on a side of the second grating away from the first grating, the grating vector of the third grating is the same as that of the second grating, and the grating vector of the fourth grating is the same as that of the first grating.

Optionally, the out-coupling area further comprises a second area and a third area, which are provided on opposite sides of the first area, the second area comprises a fifth grating, and the third area comprises a sixth grating; and
the fifth grating and the sixth grating are one-dimensional gratings, the grating vector of the fifth grating is the same as that of the first grating, and the grating vector of the sixth grating is the same as that of the second grating.

Optionally, an interval is provided between the first grating and the second grating, between the first grating and the third grating, between the second grating and the fourth grating, between the third grating and the fifth grating, and between the fourth grating and the sixth grating.

Optionally, the in-coupling area is provided with an in-coupling grating, and is configured for coupling light into the light guide substrate and enabling total internal reflection of the light within the light guide substrate for propagation to the out-coupling area; and the in-coupling grating is a one-dimensional grating and has a first vector K1, two adjacent one-dimensional gratings in the first area respectively have a second vector K2 and a third vector K3, and the first vector K1, the second vector K2 and the third vector K3 constitute an isosceles triangle with a vector angle ranging from 50° to 70°.

In a second aspect, the present disclosure provides an optical module. The optical module comprises:
the light guide device according to the first aspect; and
a light engine configured for projecting light or an image into the light guide device.

In a third aspect, the present disclosure provides a head-mounted display apparatus. The head-mounted display apparatus comprises:
a housing; and
the optical module according to the second aspect.

The beneficial effects of the present disclosure are as follows:
The light guide device provided by the embodiments of the present disclosure, which is a diffractive optical waveguide solution, enables two-dimensional pupil expansion and out-coupling functions through a combination of at least two one-dimensional gratings in the out-coupling area. As the light propagates from the in-coupling area to the out-coupling area, it can be effectively expanded in two different dimensional directions and distributed across all positions of the entire out-coupling area, which can increase the light output area enabling the human eye to obtain a clear and complete image within a larger field of view, thereby enhancing the user's visual experience.

Other features and advantages of the present disclosure will become apparent from the following detailed description of exemplary embodiments of the present disclosure with reference to the accompanying drawings.

### BRIEF DESCRIPTION OF THE DRAWINGS

In order to clearly illustrate embodiments of the present disclosure or technical solutions in the prior art, accompanying drawings that need to be used in description of the embodiments or the prior art will be briefly introduced as follows. Obviously, drawings in following description are only a portion of the drawings in the present disclosure. For those skilled in the art, other drawings can also be obtained according to the disclosed drawings without creative efforts.
FIG. 1 is a structural schematic diagram of a light guide device provided in an embodiment of the present disclosure;
FIG. 2 is a schematic diagram of a grating vector closure structure of a light guide device provided in an embodiment of the present disclosure;
FIG. 3 is a first structural schematic diagram of a first area of a light guide device provided in an embodiment of the present disclosure;
FIG. 4 is a second structural schematic diagram of a first area of a light guide device provided in an embodiment of the present disclosure;
FIG. 5 is a third structural schematic diagram of a first area of a light guide device provided in an embodiment of the present disclosure;
FIG. 6 is a first top view of a light guide device provided in an embodiment of the present disclosure; and
FIG. 7 is a second top view of a light guide device provided in an embodiment of the present disclosure.

### Description of reference numerals:

1. Light guide substrate; 2. In-coupling area; 3. Out-coupling area; 31. First grating; 32. Second grating; 33. Third grating; 34. Fourth grating; 35. Fifth grating; 36. Sixth grating; 301. First area; 01. First diffracted light; 02. Second diffracted light; 03. Third diffracted light; 04. Fourth diffracted light; 05. Out-coupling light; 06. Fifth diffracted light.

### DETAILED DESCRIPTION

Various exemplary embodiments of the present disclosure will now be described in detail with reference to the accompanying drawings. It is to be noted that unless otherwise specified, the relative arrangements, numerical expressions and values of components and steps illustrated in the embodiments do not limit the scope of the present disclosure.

The description of at least one exemplary embodiment is for illustrative purpose only and in no way implies any restriction on the present disclosure, its application, or use.

Techniques, methods and devices known to those skilled in the prior art may not be discussed in detail; however, such techniques, methods and devices shall be regarded as part of the description where appropriate.

In all the examples illustrated and discussed herein, any specific value shall be interpreted as illustrative rather than restrictive. Therefore, other examples of the exemplary embodiments may have different values.

It is to be noted that similar reference numbers and alphabetical letters represent similar items in the accompanying drawings. Once an item is defined in one drawing, further reference to it may be omitted in subsequent drawings.

The following provides a detailed description of the light guide device, optical module, and head-mounted display apparatus according to the embodiments of the present disclosure, with reference to the accompanying drawings.

Among various types of head-mounted displays, taking AR devices as an example, AR devices typically include a micro-display and an optical module. Common optical elements in the optical modules of AR devices include, for example, prisms, free-form surface lenses, and optical waveguide devices. Among the above optical elements, optical waveguide devices include geometric optical waveguides and diffractive optical waveguides. Due to their favorable optical performance, diffractive optical waveguides have been widely used in AR devices.

According to one embodiment of the present disclosure, a light guide device is provided. This light guide device is, for example, an optical waveguide device, and the optical waveguide device is, for example, a diffractive optical waveguide. The light guide device provided in the embodiments of the present disclosure can be applied, for example, to wearable devices.

Wherein, the wearable devices include head-mounted displays. The head-mounted display is, for example, AR smart glasses, an AR helmet, etc., and the specific form of the head-mounted display is not limited in the present disclosure.

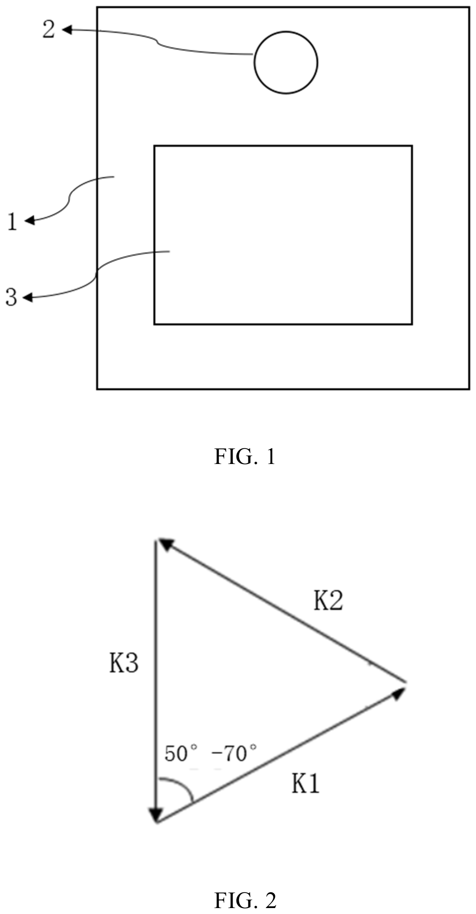

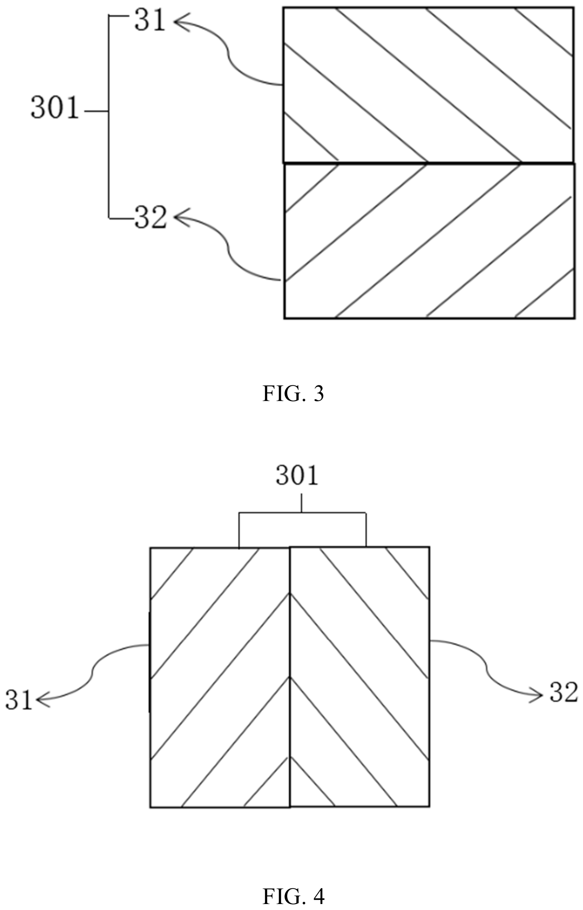

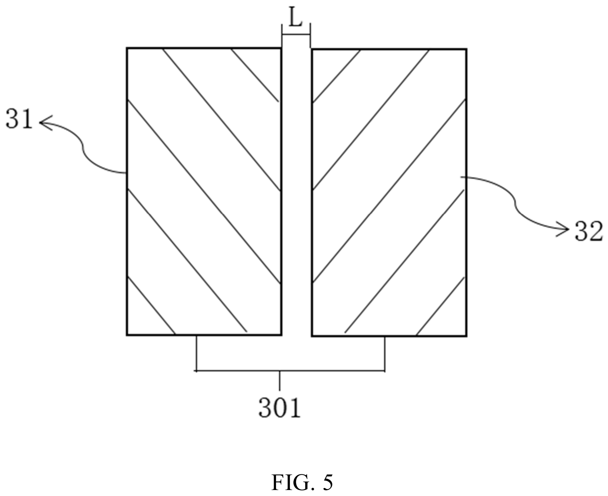

Referring to FIG. 1, the light guide device provided in the embodiments of the present disclosure includes a light guide substrate 1, an in-coupling area 2 and an out-coupling area 3 provided on the light guide substrate 1. Wherein, the out-coupling area 3 is used for performing pupil expansion and out-coupling of light from the in-coupling area 2. Referring to FIG. 3 to FIG. 7, the out-coupling area 3 includes at least a first area 301, and the first area 301 is composed of at least two adjacent one-dimensional gratings, a target interval L can be formed between any two adjacent one-dimensional gratings, and the target interval L is 0≤L≤4mm.

It should be noted that within the first area 301, two adjacent one-dimensional gratings can form a basic grating unit.

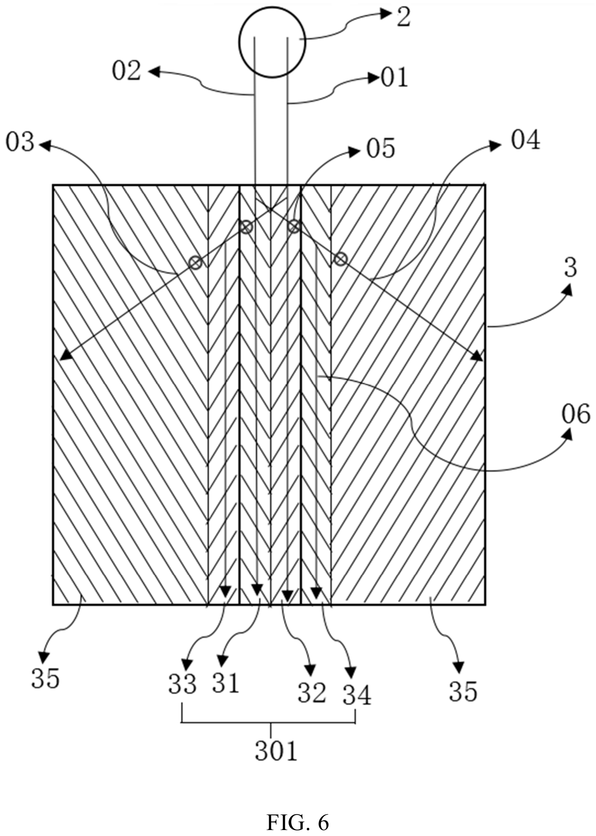

According to the light guide device provided in the above embodiment of the present disclosure, the in-coupling area 2 and the out-coupling area 3 are respectively provided on the light guide substrate 1. External light, such as light carrying image information projected by a light engine, can enter the light guide substrate 1 through the in-coupling area 2. The light propagates within the light guide substrate 1 via total internal reflection towards the out-coupling area 3. When the light propagates to the out-coupling area 3 and encounters the first area 301, the first area 301 can perform pupil expansion on the light in two different dimensional directions as shown in FIG. 6, enabling the light to fully cover the entire first area 301, which can increase the light output area of the out-coupling area 3, especially the first area 301, thereby enhancing the user's visual experience.

The conventional approach of using two-dimensional grating for both pupil expansion and out-coupling cannot achieve the effect of having light cover the entire out-coupling area. Although a two-dimensional grating can perform pupil expansion on light in two different directions, these two directions are fixed as mutually perpendicular and unadjustable, and the light cannot reach certain positions in the out-coupling area in the process of the pupil expansion, such that a field-of-view dark spot always occurs in some corners, which results in one part of the out-coupling area being able to output light, while another part may not be able to output light. However, the human eye moves within a certain range, and it needs to see the output light during this movement. Thus, pupil expansion with the two-dimensional grating limits the usable range of the human eye, i.e., the eyebox is small. Especially when the central area of the out-coupling area employs a two-dimensional grating for pupil expansion, the situation of a small eyebox is particularly evident, and satisfactory imaging effects cannot be achieved.

In the light guide device provided in the embodiments of the present disclosure, the out-coupling area 3 is designed to include a first area 301. The first area 301 uses at least two adjacent one-dimensional gratings, and a target interval can be designed between the two adjacent one-dimensional gratings. This target interval is, for example, less than 4mm, i.e., smaller than the pupil aperture of the human eye, which helps to increase the eyebox, especially the lateral eyebox. It should be noted that when the target interval is greater than 4 mm, the image perceived by the human eye may become incomplete due to missing portions.

The design of the first area 301 using a combination of two one-dimensional gratings for pupil expansion has the advantage that each one-dimensional grating has a single vector direction and. by adjusting the vector angle between two adjacent one-dimensional gratings, the pupil expansion direction of the light can be flexibly adjusted, which helps to make the light cover the first area 301 as much as possible, meaning that all parts and corners of the first area 301 can output light, which is conducive to obtaining a larger and more complete eyebox value. The human eye can perceive a clear and complete image across the entire field of view, thereby enhancing the user's visual experience.

The light guide device of the embodiments of the present disclosure includes the light guide substrate 1, the in-coupling area 2 and the out-coupling area 3 provided on the light guide substrate 1. The in-coupling area 2 and the out-coupling area 3 can be provided on the same side surface of the light guide substrate 1, as shown in FIG. 1. Of course, the in-coupling area 2 and the out-coupling area 3 can also be distributed on opposite sides of the light guide substrate 1. The embodiments of the present disclosure do not limit the relative positional relationship between the in-coupling area 2 and the out-coupling area 3, as long as the light can be coupled into the light guide substrate 1 through the in-coupling area 2, propagate within the light guide substrate 1 via total internal reflection to the out-coupling area 3, and then be coupled out through the out-coupling area 3.

Optionally, in the light guide device provided in the embodiments of the present disclosure, the light guide substrate 1 can be a single-layer color waveguide structure or a multi-layer color waveguide structure, which is not limited in the embodiments of the present disclosure.

Referring respectively to FIGs. 3 to 5, various combinations of the two one-dimensional gratings within the first region 301 are possible, and the embodiments of the present disclosure do not impose any limitation in this regard.

In addition, by combining two one-dimensional gratings within the first region 301 of the out-coupling area 3 to form a two-dimensional pupil expansion effect, the degree of freedom in the pupil expansion direction during two-dimensional pupil expansion can be enhanced.

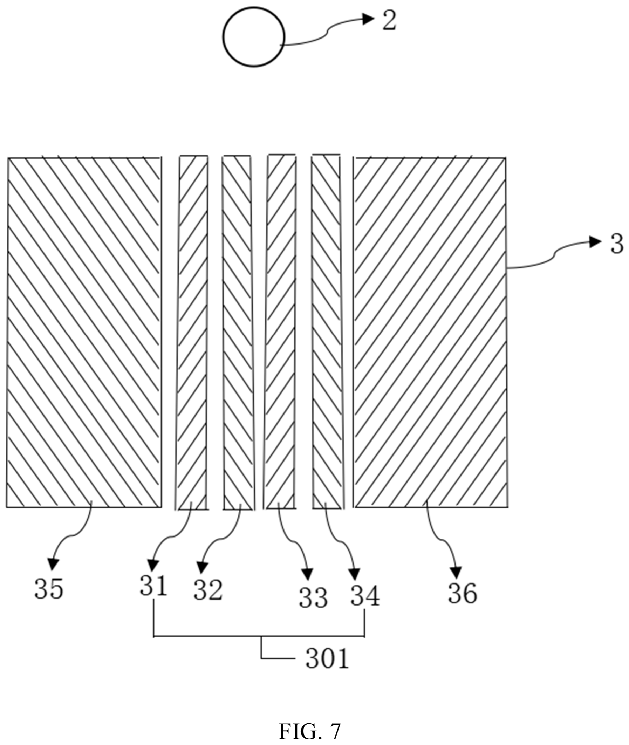

In some examples of the present disclosure, referring to FIG. 6 and FIG. 7, the first area 301 is located in the middle of the out-coupling area 3. Within the first area 301, the grating vectors of any two adjacent one-dimensional gratings form a mirror-symmetrical structure and form a target included angle.

According to the above examples, the first area 301 is located, for example, in the middle of the out-coupling area 3, where it performs pupil expansion on the light in the central field of view. The expanded light can cover the entire first area 301, thereby improving the imaging quality of the central field of view.

In the light guide device provided in the embodiments of the present disclosure, the first area 301 is designed to include at least two one-dimensional gratings, and the two one-dimensional gratings can be arranged adjacent to each other with an interval therebetween. To achieve a better pupil expansion effect, the range of the included angle formed between the grating vectors of the two one-dimensional gratings can be controlled. In this way, within the first area 301, the light can undergo two-dimensional pupil expansion in specific directions according to set angles, such that the light can cover the first area 301 more completely, avoiding the defects associated with two-dimensional grating during pupil expansion.

The first area 301 can be distributed in any shape and at any position within the out-coupling area 3, allowing greater flexibility and design freedom in the overall structure of the light guide device. As a preferred embodiment of the present disclosure, the first area 301 is located in the central area of the out-coupling area 3.

Within the first area 301, the grating vectors of two adjacent one-dimensional gratings form a mirror-symmetrical structure. Referring to FIG. 3 to FIG. 5, the symmetry axes of the two one-dimensional gratings may extend in different directions, which is not limited in the present disclosure.

Optionally, the target included angle ranges from 50° to 70°.

Taking the first area 301 including two adjacent one-dimensional gratings with an interval therebetween as an example, and referring to FIG. 4, the included angle between the grating vectors of the two one-dimensional gratings can be designed, for example, within a range of 50° to 70°. In this case, when the light within the light guide substrate 1 propagates and encounters the first area 301, it can expand in two different dimensions and cover the first area 301 as much as possible, such that all parts of the first area 301 can output light.

Wherein, the first area 301 can include, for example, 2 to 8 one-dimensional gratings, and the number of one-dimensional gratings is an even number.

The size of the first area 301 may be appropriately designed according to the dimensions of the out-coupling area 3. Wherein, the first area 301 may occupy the entire out-coupling area 3, or it may be a partial area within the entire out-coupling area 3.

For example, the first area 301 is the central area of the out-coupling area 3. A certain number of one-dimensional gratings can be designed based on the dimensions of the first area 301. Based on the typical dimensions of the out-coupling area 3, for example, 2 to 8 one-dimensional gratings may be provided in its central area, which can achieve the effect of having light cover the entire first area 301 without any field of view dark spots.

Wherein, the one-dimensional gratings within the first area 301 are configured in pairs to achieve two-dimensional pupil expansion. To achieve a better pupil expansion effect, it is preferable that the number of one-dimensional gratings is an even number.

In some examples of the present disclosure, referring to FIG. 6 and FIG. 7, the out-coupling area 3 further comprises a second area and a third area, which are provided on opposite sides of the first area 301 respectively, and each comprises a one-dimensional grating or a two-dimensional grating.

According to the above examples, in addition to being configured with the first area 301, the out-coupling area 3 can further include a second area and a third area located on the left and right sides of the first area 301. Referring to FIG. 6 and FIG. 7, the second area and the third area are located at the edges of the out-coupling area 3. Either a single or multiple two-dimensional gratings can be used in these two areas; alternatively, multiple one-dimensional gratings can also be used. This can achieve pupil expansion and out-coupling of light for the edge field of view, thereby adjusting the imaging performance at the edge field of view.

In one example of the present disclosure, referring to FIG. 6, the first area 301 comprises a first grating 31, a second grating 32, a third grating 33, and a fourth grating 34, which are arranged adjacently and are all one-dimensional gratings; the first grating 31 and the second grating 32 are located in the middle of the first area 301; the grating vectors of the first grating 31 and the second grating 32 form a mirror-symmetrical structure and form a target included angle ranging from 50° to 70°. The third grating 33 is located on a side of the first grating 31 away from the second grating 32, the fourth grating 34 is located on a side of the second grating 32 away from the first grating 31. The grating vector of the third grating 33 is the same as that of the second grating 32, and the grating vector of the fourth grating 34 is the same as that of the first grating 31.

According to the above example and referring to FIG. 6, FIG. 6 shows the optical behavior under the condition where the interval between the various one-dimensional gratings within the first area 301 is zero, specifically as follows:
The in-coupling area 2 receives light projected by an external light engine and couples the light into the light guide substrate 1, generating a first diffracted light 01 and a second diffracted light 02 propagating towards the out-coupling area 3. After the first diffracted light 01 and the second diffracted light 02 are incident on the first area 301, they encounter the paired one-dimensional gratings and propagate a third diffracted light 03 and a fourth diffracted light 04 to one side and also continue to propagate in their original directions, thereby achieving an effect equivalent to two-dimensional pupil expansion.

Due to symmetry, only the fourth diffracted light 04 is described herein. When the fourth diffracted light 04 is incident on the adjacent one-dimensional gratings within the first area 301, it generates out-coupled light 05 and continues to propagate in the original direction. The fourth diffracted light 04 continues to propagate, and when it encounters a grating with the same vector direction as the grating it first encountered, it generates a fifth diffracted light 06 and continues to propagate in the original direction. The diffraction direction of the fifth diffracted light 06 is the same as that of the second diffracted light 02. Finally, the light propagating towards both sides fully covers the entire first area 301, or even the entire out-coupling area 3.

According to the above example and referring to FIG. 6, the out-coupling area 3 further comprises a second area and a third area, which are provided on opposite sides of the first area 301 respectively. The second area comprises a fifth grating 35, and the third area comprises a sixth grating 36. The fifth grating 35 and the sixth grating 36 both are one-dimensional gratings, and the grating vector of the fifth grating 35 is the same as that of the first grating 31, and the grating vector of the sixth grating 36 is the same as that of the second grating 32.

Wherein, the second area and the third area are both provided with one-dimensional gratings, but the directions of the grating vectors of the one-dimensional gratings are different. The one-dimensional grating in the second area and the one-dimensional grating in the first area 301 adjacent to the side of the second area can form a basic grating unit, thereby enabling a two-dimensional pupil expansion effect. Similarly, the one-dimensional grating in the third area and the one-dimensional grating in the first area 301 adjacent to the side of the third area can form a basic grating unit, also enabling a two-dimensional pupil expansion effect. Therefore, pupil expansion and out-coupling of light for the edge field of view is achieved.

According to the above example, in a more preferred example, referring to FIG. 7, an interval is provided between the first grating 31 and the second grating 32, between the first grating 31 and the third grating 33, between the second grating 32 and the fourth grating 34, between the third grating 33 and the fifth grating 35, and between the fourth grating 34 and the sixth grating 36.

The area for achieving two-dimensional pupil expansion is formed by combining one-dimensional gratings with intervals which are less than 4 mm, which can enlarge the eyebox. Referring to the solution shown in FIG. 7, the lateral eyebox is enlarged. However, it should be noted that the interval cannot be greater than 4 mm, otherwise certain areas may become invisible to the human eye.

In some examples of the present disclosure and referring to FIG. 1, FIG. 6, and FIG. 7, the in-coupling area 2 is provided with an in-coupling grating, and is configured for coupling light into the light guide substrate 1 and enabling total internal reflection of the light within the light guide substrate 1 for propagation to the out-coupling area 3. Referring to FIG. 2, the in-coupling grating is a one-dimensional grating and has a first vector K1, two adjacent one-dimensional gratings in the first area 301 respectively have a second vector K2 and a third vector K3, and the first vector K1, the second vector K2 and the third vector K3 constitute an isosceles triangle having a vector angle ranging from 50° to 70°.

Two adjacent gratings in the first area 301 can form a basic grating unit.

According to the above examples, the two adjacent one-dimensional gratings in the first area 301 respectively have the second vector K2 and the third vector K3, and the first vector K1, the second vector K2 and the third vector K3 constitute an isosceles triangle having a vector angle ranging from 50° to 70°. This design can ensure that the exit angle of the light coupled out from the out-coupling area 3 is consistent with the incident angle of the light coupled in through the in-coupling area 2, which is beneficial for expanding the field of view of the light guide device.

In the light guide device provided in the embodiments of the present disclosure, the diffraction gratings in the in-coupling area 2 and the out-coupling area 3 can be volume holographic gratings, surface relief gratings, or photonic crystals, etc.

The above gratings are all diffraction gratings. A suitable type of diffraction grating can be selected as needed for application in the in-coupling area and/or the out-coupling area of the light guide device, which is not specifically limited in the present disclosure.

According to another aspect of the embodiments of the present disclosure, an optical module is provided. The optical module comprises the light guide device as described above and a light engine; wherein the light engine is configured for projecting light or an image into the light guide device.

The imaging light emitted by the light engine is projected onto the in-coupling area 2 of the light guide device. Referring to FIG. 2, the in-coupling area 2 can be used for coupling the imaging light emitted by the light engine into the light guide substrate 1 and enabling the coupled-in light to propagate toward the out-coupling area 3 in a state of total internal reflection. The out-coupling area 3 can perform pupil expansion on the propagated light and couple it out. Wherein, the area that achieves two-dimensional pupil expansion is introduced within the out-coupling 3, which is formed by a combination of one-dimensional gratings arranged with intervals, and the interval distance is between 0 and 4 mm.

Wherein, the light emitted by the light engine should be able to cover the entire in-coupling area 2.

Wherein, the light emitted by the light engine can be monochromatic light or polychromatic light.

According to yet another aspect of the embodiments of the present disclosure, a head-mounted display apparatus is also provided. The head-mounted display apparatus comprises a housing and the optical module as described above.

The head-mounted display apparatus is, for example, an AR head-mounted device, including AR glasses or an AR helmet, etc., which is not specifically limited in the embodiments of the present disclosure.

Specific embodiments of the optical module and the head-mounted display apparatus in the embodiments of the present disclosure may be implemented with reference to the respective embodiments of the above light guide device, and thus have at least all the beneficial effects brought by the technical solutions of the above embodiments, which will not be repeated herein.

The above embodiments focus on the differences between the various embodiments, and the different optimization features between the various embodiments, as long as they do not contradict each other, may be combined to form a better embodiment, which will not be repeated herein taking into account the brevity of the text.

Although some specific embodiments of the present disclosure have been described in detail through examples, those skilled in the art should understand that the above examples are for illustration only and are not intended to limit the scope of the present disclosure. Those skilled in the art should understand that the above embodiments can be modified without departing from the scope and spirit of the present disclosure. The scope of the present disclosure is defined by the accompanying claims.

## Claims

1. A light guide device, **characterized by** comprising a light guide substrate (1) and an in-coupling area (2) and an out-coupling area (3) provided on the light guide substrate (1);
wherein the out-coupling area (3) is configured for performing pupil expansion and out-coupling of light from the in-coupling area (2), the out-coupling area (3) comprises at least a first area (301), and the first area (301) is composed of at least two adjacent one-dimensional gratings with a target interval L formed between any two adjacent one-dimensional gratings, and the target interval L is 0≤L≤4mm.

2. The light guide device according to claim 1, **characterized in that** the first area (301) is located in the middle of the out-coupling area (3), and within the first area (301), the grating vectors of any two adjacent one-dimensional gratings form a mirror-symmetrical structure and form a target included angle.

3. The light guide device according to claim 2, **characterized in that** the target included angle ranges from 50° to 70°.

4. The light guide device according to claim 1, **characterized in that** the first area (301) comprises 2 to 8 one-dimensional gratings, and the number of the one-dimensional gratings is an even number.

5. The light guide device according to any one of claims 1 to 4, **characterized in that** the out-coupling area (3) further comprises a second area and a third area, which are provided on opposite sides of the first area (301) and comprise a one-dimensional grating or a two-dimensional grating.

6. The light guide device according to claim 5, **characterized in that** the first area (301) comprises a first grating (31), a second grating (32), a third grating (33), and a fourth grating (34), which are arranged adjacently and are all one-dimensional gratings;
the first grating (31) and the second grating (32) are located in the middle of the first area (301), and the grating vectors of the first grating (31) and the second grating (32) form a mirror-symmetrical structure and form a target included angle ranging from 50° to 70°; and
the third grating (33) is located on a side of the first grating (31) away from the second grating (32), the fourth grating (34) is located on a side of the second grating (32) away from the first grating (31), the grating vector of the third grating (33) is the same as that of the second grating (32), and the grating vector of the fourth grating (34) is the same as that of the first grating (31).

7. The light guide device according to claim 6, **characterized in that** the out-coupling area (3) further comprises a second area and a third area, which are provided on opposite sides of the first area (301), the second area comprises a fifth grating (35), and the third area comprises a sixth grating (36); and
the fifth grating (35) and the sixth grating (36) are one-dimensional gratings, the grating vector of the fifth grating (35) is the same as that of the first grating (31), and the grating vector of the sixth grating (36) is the same as that of the second grating (32).

8. The light guide device according to claim 7, **characterized in that** an interval is provided between the first grating (31) and the second grating (32), between the first grating (31) and the third grating (33), between the second grating (32) and the fourth grating (34), between the third grating (33) and the fifth grating (35), and between the fourth grating (34) and the sixth grating (36).

9. The light guide device according to claim 1, **characterized in that** the in-coupling area (2) is provided with an in-coupling grating, and is configured for coupling light into the light guide substrate (1) and enabling total internal reflection of the light within the light guide substrate (1) for propagation to the out-coupling area (3); and
the in-coupling grating is a one-dimensional grating and has a first vector K1, two adjacent one-dimensional gratings in the first area respectively have a second vector K2 and a third vector K3, and the first vector K1, the second vector K2 and the third vector K3 constitute an isosceles triangle with a vector angle ranging from 50° to 70°.

10. An optical module, **characterized by** comprising:
the light guide device according to any one of claims 1 to 9; and
a light engine configured for projecting light or an image into the light guide device.

11. A head-mounted display apparatus, **characterized by** comprising:
a housing; and
the optical module according to claim 10.
